Europäisches Patentamt

European Patent Office

Office européen des brevets

(11) Publication number: **0 311 247**
**A2**

# EUROPEAN PATENT APPLICATION

(21) Application number: **88308003.8**

(22) Date of filing: **30.08.88**

(51) Int. Cl.⁴: **C09D 3/727 , B44C 1/17**

(30) Priority: **04.09.87 GB 8720851**

(43) Date of publication of application:
**12.04.89 Bulletin 89/15**

(84) Designated Contracting States:
**AT BE CH DE ES FR GB GR IT LI LU NL SE**

(71) Applicant: **British Ceramic Research Limited**
**Queens Road Penkhull**
**Stoke-on-Trent Staffordshire ST4 7LQ(GB)**

(72) Inventor: **Downes, James Dominic**
**12 Woodside Street**
**Cinderford Gloucestershire, GL 14 2NU(GB)**

(74) Representative: **Campbell, Iain Angus et al**
**Swindell & Pearson 48 Friar Gate**
**Derby DE1 1GY(GB)**

(54) Flexible films.

(57) A method of making a flexible film comprising subjecting a vinylic monomer in the presence of a free radical initiator to a first ultra violet irradiation to form a substance with a required increased viscosity and subsequently subjecting said substance to a second ultra violet irradiation in the presence of a further free radical initiator to form a flexible film.

EP 0 311 247 A2

## Flexible Films

The present invention relates to a method of making flexible films and particularly but not exclusively to a method for making covercoats and especially covercoats for transfers for ceramic decorations.

A common method of decorating ceramics is the use of waterslide transfers. These comprise of a base paper coated by a water soluble gum upon which is printed the decoration comprising of ceramic colours. Over this decoration is printed a covercoat layer which maintains the integrity of the design and allows handling of the transfer.

The covercoated design is then separated from the base paper by soaking in water and is then placed on the ceramic article. Adhesion to the ware is achieved by the water soluble gum which is partially transferred from the paper. The ware is then dried and fired.

The production of these transfers currently uses solvent based inks and covercoats. Normally the covercoat used is a plasticised solvent type polymethacrylate ester resin which is chosen for its good burn-out properties. However, the use of these conventional solvent based covercoats has several disadvantages. These include:-

(i) Very slow drying of the transfer when the covercoat is screened onto the design.

(ii) The ageing and physical properties of the covercoat.

(iii) The use of hazardous solvents.

(iv) The requirement of interleaving to prevent blocking of the transfer papers.


### (i) Drying

The current solvent based films can usually be dried in 8-12 hours under normal room conditions and in about 4 hours in forced air conditions at room temperatures. Faster evaporation of the solvent can be achieved but this requires either higher temperatures which would curl and distort the backing paper or the use of lower boiling point solvents such as acetone which would be more hazardous and would greatly increase the ageing characteristics of the covercoat.


### (ii) Ageing

Much of the plasticity of a fresh solvent based OPL (over print layer) is due to the plasticising effect of the residual solvent. This gradually evaporates and the covercoat becomes tougher and less extensible. The transfers become too brittle to use after about six months of storage in the dark and much earlier if exposed to light.


### (iii) Hazardous Solvents

The solvents used also produce problems of health and safety. The fire hazard of the operation is increased and irritant and noxious vapours are present.


### (iv) Blocking

The very long drying times imply that often the transfer papers are not fully dry after one day. Usually paraffin base coated papers are interleaved between transfers to prevent blocking (i.e. sticking together) of transfers.

For satisfactory Application to complex shapes the transfer must have both plastic and elastic properties. It must also have sufficient strength to hold the design intact during Application. These properties are imparted to the transfer by its covercoat. Reduced ageing and so increased shelf-life would be a bonus.

Faster drying solvent-based or very fast radiation curing inks have been developed, but the currently available rapid drying covercoats do not have the required plastic and elastic extension. The radiation curable covercoat films presently available, although curable in a few seconds, are tough and elastic but show no permanent deformation and have proved unsuitable for use as covercoats.

According to the present invention there is provided a method of making a flexible film, the method comprising subjecting a first vinylic monomer to a first irradiation until a substance with a predetermined increased viscosity is obtained, and subsequently subjecting said substance to a second irradiation to form a flexible film.

Preferably a first radiation susceptible free radical initiator is mixed with the first vinylic monomer prior to the first irradiation.

Preferably the first free radical initiator is ultra violet susceptible and the first and second irradiations may be of ultra violet radiation.

Preferably the power of the first ultra violet irradiation is in the range 0 to 10 Wcm$^{-1}$, and desirably the power of the second ultra violet irradiation is in the range 80 to 300 Wcm$^{-1}$.

Preferably the first vinylic monomer comprises one or more acrylates, and desirably these acrylates are methacrylates.

Preferably a co-initiator is added with the first initiator.

Preferably one or more vinylic monomers are added between the first and second irradiation. These subsequently added monomers may again be acrylates, and preferably methacrylates.

Preferably a second radiation susceptible free radical initiator is added between the first and second irradiations. A co-initiator may be added with the second initiator and these may both be ultra violet susceptible.

The substance may be temperature controlled during the first irradiation, and preferably the substance is maintained at this time within the temperature range -20°C to 80°C.

According to the present invention there is also provided a flexible film suitable for use as a covercoat for transfers for ceramic decoration, made by a method as described in any of the preceding nine paragraphs.

Further according to the present invention there is provided a method of making transfers, the method comprising subjecting a first vinylic monomer to a first irradiation until a substance with a predetermined increased viscosity is obtained, coating said substance onto the top surface of a substrate comprising a decorative layer printed upon a base layer, and subjecting the structure thus formed to a second irradiation to provide a covercoat on the substrate.

Still further according to the present invention there is provided a transfer made by a method as described in the above paragraph.

Yet further according to the present invention there is provided a resin which is formable into a flexible film by irradiation with the resin being formed by irradiating a vinylic monomer.

Preferably the resin is irradiated in the presence of a radiation susceptible free radical initiator.

Preferably the resin is formed using ultra violet radiation and the initiator is ultra violet susceptible.

Preferably the power of the ultra violet radiation used to form the resin is in the range 0 to 10 Wcm$^{-1}$ and the resin is irradiated by ultra violet radiation of a power between 80 and 300 Wcm$^{-1}$.

Preferably the vinylic monomer comprises one or more acrylates, and desirably these acrylates are methacrylates.

Preferably a co-initiator is added with the initiator.

Embodiments of the present invention will now be described by way of example only.

A first example of a flexible film suitable for use as a covercoat for a transfer for ceramic decoration was made by the following method.

The following ingredients were mixed thoroughly -

|  | Parts by weight |
|---|---|
| n-butyl methacrylate | 6 |
| Ethoxy-ethyl methacrylate | 3 |
| Darocur 1116 * | 0.5 |

* 1 - ( - Isopropylphenyl)-2 Hydroxy-2-methyl-propan-1-one.

This mixture was irradiated with ultra violet light with a power demand in the order of 0.4 Wcm$^{-1}$ until a viscous liquid (~10,000cps) was obtained. The temperature of the mixture during the irradiation was maintained between -20°C and 80°C.

3

This liquid was then blended with the following ingredients :

|  | Parts by weight |
| --- | --- |
| Ethoxy-ethyl methacrylate | 3 |
| Darocur 1116 * | 0.3 |

* 1 - ( - Isopropylphenyl)-2 Hydroxy-2-methyl-propan-1-one.

This produced a medium with a viscosity suitable for screen printing. Layers of screen printed medium were then cured to dry films using a second ultra violet radiation. A medium pressure mercury ultra violet lamp with a power demand in the order of 80 Wcm$^{-1}$ cured this film in < 6 seconds and cure times < 1 sec. have been achieved with similar formulations. The film produced had very good extension properties (see later Table) similar to those of a new conventional covercoat. The transfers produced with this film as a covercoat exhibited similar handling properties to conventional OPL transfers and could be used to decorate complex shaped ware. When applied on glaze onto ware it was fired to 800°C at 3000°C/hour without showing burn-out problems, which compares favourably with conventional solvent based covercoats.

A second example of such a flexible film was made by the following method.

N-butyl methacrylate was mixed with 5% Darocur 1116, and cured for five passes each lasting five minutes of low power ultra violet radiation. The viscous liquid thus formed was subsequently cured by eight passes each of 0.4 seconds under medium power ultra violet radiation.

The following table illustrates the characteristics displayed by these two films in comparison with a conventional flexible film example 3, suitable for use as a covercoat for ceramic decoration transfers. Example 3 is a conventional covercoat made from methacrylates using trimethyl benzene as the solvent. Two sets of readings were taken for each example to show the ageing characteristics for that sample.

|  | Elastic Limit | | | At failure | | | |
| --- | --- | --- | --- | --- | --- | --- | --- |
|  | Stress N/mm$^2$ | Strain E/% | Modulus | Stress N/mm$^2$ | Strain (E) % | Age/days | Thickness/mm |
| Example 1 | 2.55 | 59.3 | .0430 | 2.36 | 380 | 1 | 0.417 |
|  | 2.43 | 30.6 | 2.0797 | 1.26 | 127.9 | 1 | 0.112 |
| Example 2 | 1.30 | 22 | 0.059 | 1.20 | 135 | 30 | 0.030 |
|  | 1.46 | 35 | 0.042 | 1.42 | 92 | 60 | 0.030 |
| Example 3 | 0.75 | 5 | 0.15 | 1.49 | 318 | 0 | 0.028 |
|  | 1.85 | 12.5 | 0.15 | 6.79 | 245 | 52 | 0.028 |

The above example thus describes flexible films suitable for use as ceramic transfer covercoats which may be cured by a brief irradiation with ultra violet radiation, thus alleviating the need for lengthy drying of the newly produced transfers. Such covercoats have sufficient flexibility and extensibility to enable complex surfaces to be decorated. Such covercoats exhibit excellent burn-out properties with no disruption of lithographic decoration.

The process used to make these covercoats eliminates the use of volatile, noxious and hazardous solvents and thus greatly improves working conditions.

It is to be realised that many different substances may be used within the scope of the invention with this method to make these films, the substances being chosen for the particular requirements. It is also to be realised that these flexible films may be put to other uses than as covercoats, for example as layers on glassware, metals, fibres and plastics.

By introducing pigment and flux to the aforementioned UV curable flexible film prior to the second irradiation, a screenable flexible film forming a UV curable ink is produced which shows excellent burn-out properties when used with UV curable covercoat.

Whilst the above examples involve the use of ultra violet radiation, other types of actinic or particulate radiation such as electron beam or X-ray may be used. With an electron beam no initiator is required.

In a modified method of making a transfer the vinylic monomer, after it has been subjected to the first irradiation to increase its viscosity to a predetermined level is coated on the base layer, subjected to a second irradiation to provide a flexible coat on the substrate and then printed on its top surface with a decorative layer.

## Claims

1. A method of making a flexible film, characterised in that the method comprises subjecting a first vinylic monomer to a first irradiation until a substance with a predetermined increased viscosity is obtained, and subsequently subjecting said substance to a second irradiation to form a flexible film.

2. A method for making transfers, characterised in that the method comprises subjecting a first vinylic monomer to a first irradiation until a substance with a predetermined increased viscosity is obtained, coating said substance onto the top surface of the substrate comprising a decorative layer printed upon a base layer, and subjecting the structure thus formed to a second irradiation to provide a covercoat on the substrate.

3. A method of making transfers, characterised in that the method comprises subjecting a first vinylic monomer to a first irradiation until a substance with a predetermined increased viscosity is obtained, coating said substance onto the top surface of the substrate comprising a decorative layer printed upon a base layer, subjecting the structure thus formed to a second irradiation to provide a coat on the substrate and printing a decorative layer on the top surface of the coat.

4. A method according to claim 1 or 2 or 3, characterised in that a first radiation susceptible free radical initiator is mixed with the first vinylic monomer prior to the first irradiation.

5. A method according to claim 4, characterised in that a co-initiator is added with the first initiator.

6. A method according to any of the preceding claims, characterised in that the first and second irradiations are of ultra violet radiation.

7. A method according to any of the preceding claims, characterised in that the power of the first ultra violet irradiation is in the range 0 to 10 Wcm$^{-1}$, and the power of the second ultra violet irradiation is in the range 80 to 300 Wcm$^{-1}$.

8. A method according to any of the preceding claims, characterised in that one or more vinylic monomers are added between the first and second irradiation.

9. A method according to any of the preceding claims, characterised in that the or each vinylic monomer comprises one or more acrylates.

10. A method according to claim 9, characterised in that the acrylates are methacrylates.

11. A method according to any of the preceding claims, characterised in that a second radiation susceptible free radical initiator is added between the first and second irradiations.

12. A method according to any of the preceding claims, characterised in that the substance is maintained within the temperature range 20°C to 80°C.

13. A method according to any one of the preceding claims when dependant upon claim 1, characterised in that pigment and flux is added to the monomer after the first irradiation whereby after final irradiation an ink is formed.

14. A flexible film suitable for use as a covercoat for transfers for ceramic decoration, characterised in that it is made by a method as described in any of claims 4 to 12 when dependent on claim 1.

15. A transfer characterised in that it is made by a method as described in any of claims 2 to 12.

16. A resin which is formable into a flexible film by irradiation, characterised in that the resin is formed by a first irradiation of a vinylic monomer as described in any of claims 4 to 7, 9, 10 or 12.